# FASCICULE DE BREVET EUROPEEN

(11) **EP 1 669 279 B1**
(45) Date de publication et mention de la délivrance du brevet: **25.02.2009**
(21) Numéro de dépôt: 05292656.5
(22) Date de dépôt: 13.12.2005
(51) Int. Cl.: B62D 25/10

(54) **Capot avant à conducteurs électriques pour véhicule automobile**
Motorhaube mit elektrischen Leitern für ein Kraftfahrzeug
Front bonnet provided with electric conductors for a motor vehicle.

(30) Priorité: 13.12.2004 FR 0413226
(43) Date de publication de la demande: 14.06.2006
(73) Titulaire: COMPAGNIE PLASTIC OMNIUM, 69007 Lyon (FR)
(72) Inventeur: Guyon, Sébastien, 01460 Montreal la Cluse (FR); Spaak, Marie-Laure, 69008 Lyon (FR); Vilquin, Gilles, 69100 Villeurbanne (FR); Cheron, Hugues, 01800 Meximieux (FR)
(74) Mandataire: Remy, Vincent Noel Paul

(56) Documents cités:
- WO-A-03/068584
- DE-A1- 10 026 264
- DE-U1- 29 917 502
- US-A1- 2003 141 743

## Description

### Etat de la technique.

Un capot est une pièce de carrosserie qui, en fermant le compartiment moteur d'un véhicule, remplit une fonction esthétique et une fonction acoustique.

Sous le capot, le compartiment moteur contient de nombreux équipements qui nécessitent une alimentation électrique ou la transmission d'un signal électrique de commande ou de contrôle.

US 2003/141743 décrit un capot de véhicule automobile incluant des câbles électriques permettant de relier électriquement un équipement du compartiment moteur à une alimentation. Les câbles comprennent deux extrémités débouchant par des orifices distincts du capot.

### Problème posé par cet état de la technique.

Les nombreux raccordements électriques occasionnent des manipulations importantes lors du montage des organes électriquement reliés. En outre, l'agencement dans le compartiment moteur de nombreux faisceaux de câbles n'est pas toujours aisé.

### Solution proposée par l'invention

L'invention propose un capot de véhicule automobile, conforme à la revendication 1.

Ainsi, les conducteurs électriques intégrés au capot peuvent être raccordés, à une extrémité, à un dispositif d'alimentation, et à l'autre extrémité, à un organe du compartiment moteur, les orifices du capot par lequel débouchent les conducteurs électriques étant disposés à proximité respectivement du dispositif d'alimentation et de l'organe.

L'invention permet donc un raccordement des organes facilité, ne nécessitant pas de manipulations importantes de faisceaux de câbles lors de l'étape de montage.

De préférence, le capot est au moins partiellement réalisé en matière plastique (thermodurcissable ou thermoplastique).

Dans ce cas, les conducteurs électriques sont avantageusement intégrés au capot lors du moulage de la matière plastique.

Ils peuvent également être intégrés lors du montage du capot, par exemple entre une doublure et une peau de capot.

Des exemples de conducteurs électriques sont des câbles électriques. Lorsqu'ils sont surmoulés dans le capot, l'invention permet de faire l'économie des gaines électriques. Un autre exemple est constitué par des antennes intégrées dans le capot, notamment à l'avant de celui-ci dans une partie plongeante, pour des radars d'aide à la conduite.

### Modes de réalisation particuliers.

- Le capot comporte une peau externe (éventuellement en acier ou en aluminium) et une doublure de capot, laquelle est réalisée en matière plastique et inclut les conducteurs électriques intégrés.
- La doublure de capot possède des formes issues de moulage qui permettent au capot de remplir différentes fonctions supplémentaires. La doublure peut être assemblée au capot sur la chaîne de montage du véhicule sans que cette chaîne n'ait à être rallongée.
- Dans une première variante, la doublure de capot est montée sous la peau de capot, du côté du compartiment moteur.
- Dans une seconde variante, la doublure de capot est montée par dessus la peau de capot et remplit une fonction esthétique. Cette seconde variante est particulièrement adaptée à l'intégration de capteurs solaires.

### Description d'un exemple

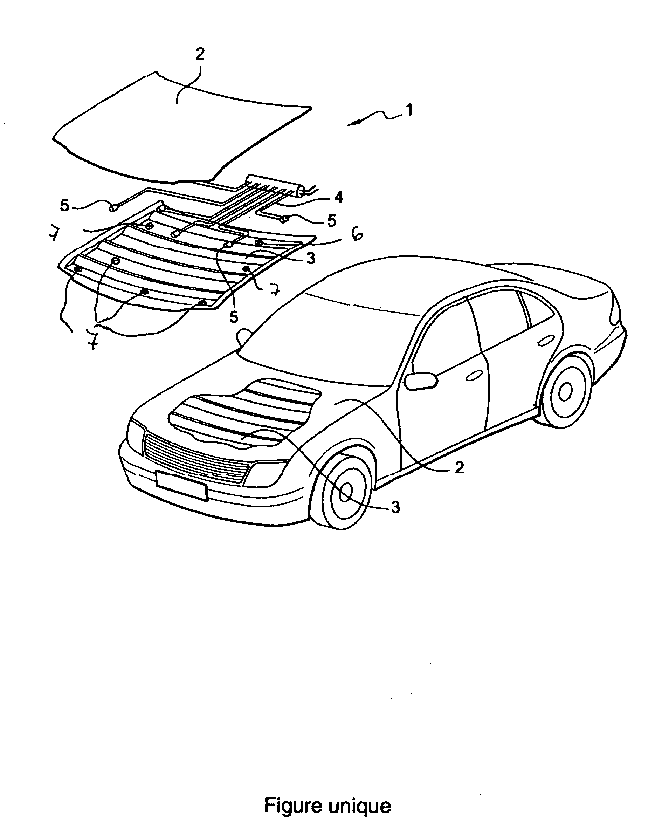

La figure unique annexée représente, en perspective, un véhicule automobile muni d'un capot selon l'invention, dont un éclaté est également fourni.

### Vocabulaire

| Des revendications | de l'exemple | référence sur les dessins |
|---|---|---|
| Capot | Capot | 1 |
| Peau de capot | Peau de capot | 2 |
| Doublure de capot | Doublure de capot | 3 |
| Conducteurs électriques | Cables électriques | 4 |
| Connexion électriques | Connecteurs enfichables | 5 |
| Orifices | Orifice d'entrée des câbles | 6 |
| Orifices | Orifices de sortie des câbles | 7 |

II est bien entendu que ces modes de réalisation particuliers ne présentent aucun caractère limitatif et qu'ils pourront recevoir toute modification désirable sans sortir pour cela du cadre de l'invention tel que défini par les revendications.

## Revendications

1. Capot de véhicule automobile, le capot incluant divers conducteurs électriques (4) intégrés à sa structure, chaque conducteur électrique (4) ayant deux extrémités dont chacune débouche sur une face du capot, les deux extrémités de chaque conducteur électrique (4) débouchant par des orifices (6, 7) différents du capot, **caractérisé en ce que** des connexions électriques et/ou électroniques (5) sont aussi intégrées au capot (1) pour mettre les conducteurs électriques (4) intégrés en contact électrique avec les organes devant être reliés.

2. Capot selon la revendication 1, au moins partiellement réalisé en matière plastique.

3. Capot selon la revendication 2, dans lequel les conducteurs électriques (4) sont intégrés au capot (1) lors du moulage de la matière plastique.

4. Capot selon l'une des revendications 1 et 2, dans lequel les conducteurs électriques (4) sont intégrés au capot (1) lors du montage du capot.

5. Capot selon l'une quelconque des revendications précédentes, dans lequel les conducteurs électriques (4) sont des câbles électriques.

6. Capot selon l'une quelconque des revendications 1 à 4, dans lequel les conducteurs électriques (4) sont des antennes intégrées dans le capot (1), notamment à l'avant de celui-ci dans sa partie plongeante, pour des radars d'aide à la conduite.

7. Capot selon l'une quelconque des revendications précédentes, comportant une peau externe (2) et une doublure (3) de capot, laquelle est réalisée en matière plastique et inclut les conducteurs électriques intégrés (4).

8. Capot selon la revendication 7 dans lequel la doublure (3) de capot est montée sous la peau (2) de capot, du côté du compartiment moteur.

9. Capot selon la revendication 7, dans lequel la doublure de capot est montée par dessus la peau (2) de capot et remplit une fonction esthétique.

## Claims

1. Motor vehicle bonnet, the bonnet including various electrical conductors (4) integrated in its structure, each electrical conductor (4) having two ends, each end opening out in a face of the bonnet, the two ends of each electrical conductor (4) opening out via different orifices (6, 7) of the bonnet, and the bonnet being **characterized in that** electrical and/or electronic connections (5) are also integrated in the bonnet (1) in order to put the integrated electrical conductors (4) into electrical contact with the members that are to be connected.

2. Bonnet according to claim 1, made at least in part out of plastics material.

3. Bonnet according to claim 2, wherein the electrical conductors (4) are integrated in the bonnet (1) during molding of the plastics material.

4. Bonnet according to claim 1 or claim 2, wherein the electrical conductors (4) are integrated in the bonnet (1) during mounting of the bonnet.

5. Bonnet according to any preceding claim, wherein the electrical conductors (4) are electric cables.

6. Bonnet according to any one of claims 1 to 4, wherein the electrical conductors (4) are antennas integrated in the bonnet (1), in particular at the front thereof in its downwardly-extending portion, for driving-assistance radars.

7. Bonnet according to any preceding claim, having an outer skin (2) and a bonnet liner (3), which liner is made of plastics material and includes the integrated electrical conductors (4).

8. Bonnet according to claim 7, wherein the bonnet liner (3) is mounted under the bonnet skin (2), beside the engine compartment.

9. Bonnet according to claim 7, wherein the bonnet liner is mounted above the bonnet skin (2) and performs an appearance function.

## Patentansprüche

1. Haube eines Kraftfahrzeugs, wobei die Haube verschiedene in ihre Struktur integrierte elektrische Leiter (4) aufweist, wobei jeder elektrische Leiter (4) zwei Enden aufweist, von denen beide an einer Seite der Haube enden, wobei die beiden Enden von jedem elektrischen Leiter (4) in verschiedenen Öffnungen (6, 7) der Haube enden, **dadurch gekennzeichnet, dass** die elektrischen und/oder elektronischen (5) Anschlüsse ebenfalls in der Haube (1) integriert sind, um die integrierten elektrischen Leiter (4) in elektrischen Kontakt mit den Organen zu bringen, die verbunden werden müssen.

2. Haube nach Anspruch 1, wenigstens teilweise ausgeführt in Kunststoff.

3. Haube nach Anspruch 2, wobei die elektrischen Leiter (4) beim Formen des Kunststoffs in die Haube (1) integriert werden.

4. Haube nach Anspruch 1 und 2, wobei die elektrischen Leiter (4) beim Montieren der Haube in die Haube (1) integriert werden.

5. Haube nach einem der vorhergehenden Ansprüche, wobei die elektrischen Leiter (4) Stromkabel sind.

6. Haube nach einem der Ansprüche 1 bis 4, wobei die elektrischen Leiter (4) in die Haube (1) integrierte Antennen sind, insbesondere im vorderen Bereich von dieser im versenkten Teil für einen Radar eines Fahrassistenzsystems.

7. Haube nach einem der vorhergehenden Ansprüche, umfassend eine äußere Haut (2) und eine Verstärkung (3) der Haube, wobei diese aus Kunststoff besteht und die integrierten elektrischen Leiter (4) einschließt.

8. Haube nach Anspruch 7, wobei die Verstärkung (3) der Haube unter der Haut (2) der Haube an der Motorraumseite montiert ist.

9. Haube nach Anspruch 7, wobei die Verstärkung der Haube oberhalb der Haut (2) der Haube montiert ist und eine ästhetische Funktion erfüllt.
